# FASCICULE DE BREVET EUROPEEN

(11) **EP 1 419 998 B1**
(45) Date de publication et mention de la délivrance du brevet: **07.09.2005**
(21) Numéro de dépôt: 03292741.0
(22) Date de dépôt: 04.11.2003
(51) Int. Cl.: C03C 25/12, C03C 25/26

(54) **Procédé de revêtement d'une fibre optique**
Verfahren zur Beschichtung einer optischen Faser
Method for coating an optical fibre

(30) Priorité: 18.11.2002 FR 0214375
(43) Date de publication de la demande: 19.05.2004
(73) Titulaire: Draka Comteq B.V., 1018 TX Amsterdam (NL)
(72) Inventeur: Andrieu, Xavier, 91220 Bretigny sur Orge (FR); VanPoulle, Sophie, 91190 Gif sur Yvette (FR)
(74) Mandataire: Blokland, Arie

(56) Documents cités:
- EP-A- 0 501 339
- DE-A- 4 341 217
- PATENT ABSTRACTS OF JAPAN vol. 013, no. 482 (P-953), 2 novembre 1989 (1989-11-02) & JP 01 193706 A (FUJIKURA LTD), 3 août 1989 (1989-08-03)
- PATENT ABSTRACTS OF JAPAN vol. 017, no. 327 (C-1073), 22 juin 1993 (1993-06-22) & JP 05 032712 A (ASAHI GLASS CO LTD), 9 février 1993 (1993-02-09)

## Description

La présente invention se rapporte à un procédé de revêtement d'une fibre optique à partir d'une composition de revêtement réticulable par un rayonnement ultraviolet (U.V.). Il s'agit en particulier d'un procédé permettant de procéder au revêtement de la fibre immédiatement après le fibrage à partir d'une préforme. Ce procédé est destiné au revêtement d'un conducteur fin comme une fibre optique, mais peut être également utilisé pour le revêtement de tout autre type de produit, en particulier ceux dont la fabrication limite le temps disponible pour effectuer la réticulation. L'invention s'étend en outre à une fibre optique munie d'un tel revêtement et à un câble de télécommunication contenant une telle fibre.

De manière bien connue, une fibre optique est destinée à transmettre des ondes lumineuses. Elle est constituée d'un coeur optique entouré d'une gaine optique. Le coeur optique est destiné à assurer le guidage de la majorité des ondes lumineuses transmises par la fibre optique. Ces deux éléments (coeur et gaine optiques) constituent la partie optique de la fibre, appelée fibre optique nue. Cette partie est très sensible aux perturbations extérieures, ces dernières pouvant entraîner une détérioration de ses propriétés de transmission, et donc un fonctionnement dégradé de la fibre optique. Afin de protéger la fibre nue contre ces perturbations extérieures, il est bien connu de revêtir la gaine optique d'une couche de protection en un matériau plastique, appelée revêtement éventuellement constitué de plusieurs couches. La couche externe du revêtement peut être colorée ou recouverte par une couche colorante afin de pouvoir coder ou reconnaître la fibre. Une telle fibre revêtue est le plus souvent destinée à être incluse dans un câble de télécommunication. Plusieurs fibres optiques peuvent être associées en parallèle pour former un ruban. Dans ce cas, on prévoit un enrobage pour maintenir ensemble les fibres.

Le revêtement a pour rôle de protéger le conducteur vis à vis des agressions mécaniques extérieures, de la pénétration d'humidité et, si nécessaire, d'assurer une isolation électrique. Le revêtement protège le conducteur des agressions mécaniques ou chimiques susceptibles de provoquer des défauts d'atténuation pour les transmissions optiques. Le revêtement confère aussi au conducteur ses propriétés mécaniques ; il doit notamment absorber les microcourbures et les contraintes éventuelles. En outre en cas d'incendie, il doit permettre une résistance suffisante au feu. Le revêtement doit posséder une bonne adhérence sur le support qui lui est destiné. Dans le cas d'une fibre optique, les propriétés physiques du revêtement doivent être compatibles avec les conditions de fibrage, en particulier la vitesse de fibrage et l'utilisation finale de la fibre.

La solution utilisée actuellement pour réaliser les couches de protection consiste à revêtir la gaine optique d'une résine durcissable qui est photoréticulée sous rayonnement ultraviolet. En pratique pour réaliser le revêtement d'un conducteur, on entoure la fibre optique d'une couche de la composition à réticuler à l'état liquide, puis le matériau est solidifié par exposition au rayonnement ultraviolet. Pour effectuer la réticulation, on introduit généralement des éléments photo-initiateurs dans la composition à polymériser. L'exposition au rayonnement ultraviolet provoque, grâce à ces photo-initiateurs, une réaction photo-chimique de polymérisation qui entraîne le durcissement du matériau. L'exposition au rayonnement ultraviolet s'effectue habituellement grâce à une source de rayonnement U.V. monochromatique ou quasi monochromatique telle qu'un laser, une lampe EXCIMER ou une lampe à arc.

On connaît le document DE-41 26 860 qui décrit un procédé de fabrication d'un ruban de fibres optiques dans lequel les fibres optiques déjà revêtues sont disposées parallèlement et assemblées grâce à une colle à base acrylate. On précise que la réticulation du revêtement de la fibre sous un rayonnement U.V. s'effectue habituellement dans un gaz inerte, car la présence d'oxygène a pour effet d'inhiber la réaction, mais la colle adhère mal sur la surface plane et parfaitement durcie. Ce document propose donc d'effectuer la réticulation du revêtement en présence de quantité définie d'oxygène afin que la surface du revêtement reste microscopiquement collante et se lie solidement avec la colle. La vitesse de passage du fil au travers de l'installation est de 30m/mn. Le durcissement de la composition est réalisé d'abord sous azote, puis l'azote est enrichi de parts d'oxygène successivement plus importantes, en présence d'un rayonnement U.V..

Selon ce document on utilise l'oxygène pour empêcher les groupements acrylates de réagir entre eux afin d'obtenir une polymérisation incomplète. Actuellement les vitesses de fibrage utilisées dans la fabrication de fibres optiques sont beaucoup plus élevées (supérieures à 300m/mn) que celles évoquées dans ce document. A ces vitesses la réaction ne peut plus être complète.

L'application du revêtement s'effectue classiquement dans une tour de fibrage où la fibre optique défile à une vitesse de l'ordre de 1000 à 1200m/mn, et qui peut atteindre 2000m/mn. A une telle vitesse, la réticulation au sortir de l'installation de fibrage est donc forcément incomplète. Cependant pour des raisons de rentabilité industrielle, il n'est possible d'effectuer qu'un seul passage à vitesse élevée dans l'installation et cet unique passage doit permettre d'aboutir une réticulation complète du revêtement. Le problème posé ici est donc au contraire d'accélérer la réticulation de la composition de revêtement dans l'installation, et de permettre à la réaction de se poursuivre après la sortie de l'installation de fibrage.

La présente invention a donc pour but de proposer un procédé pour le revêtement d'une fibre optique à partir d'une composition polymérisable, permettant d'aboutir une réticulation complète tout en ne nécessitant qu'un seul passage à vitesse élevée dans l'installation de fibrage.

L'invention a aussi pour but de proposer une fibre optique comprenant un revêtement polymérisé obtenu par ce procédé, et un câble de télécommunication comprenant une telle fibre.

L'objet de la présente invention est un procédé de revêtement d'une fibre optique comprenant au moins une étape d'enduction de ladite fibre avec une composition de revêtement polymérisable, et au moins une étape de polymérisation de ladite composition, caractérisé en ce que ladite composition contient au moins un composé insaturé comportant au moins une double liaison et au moins un catalyseur d'oxydation, et en ce que ladite étape de polymérisation comprend une première phase en ligne consistant à soumettre ladite fibre enduite à un rayonnement U.V. pendant une durée inférieure à la durée nécessaire à une polymérisation complète, suivie d'une deuxième phase hors ligne consistant à mettre ladite fibre enduite en présence d'un milieu oxydant afin de compléter la polymérisation.

Avantageusement le milieu oxydant est gazeux, ce qui facilite la mise en contact de la fibre avec l'oxydant. De préférence le milieu oxydant est l'oxygène, et de préférence encore le milieu oxydant est l'air.

Au cours d'une étape préliminaire, les ingrédients entrant dans la composition destinée à former le revêtement de la fibre optique sont mélangés. La composition polymérisable ainsi obtenue est appliquée sur la surface de la fibre optique issue d'une préforme. Au cours de la première phase de l'étape de polymérisation, la polymérisation de la composition est effectuée de manière connue sous l'effet du rayonnement ultraviolet. La durée d'exposition de la fibre à ce rayonnement est suffisante pour obtenir un revêtement qualifié de "sec" au toucher, mais cependant inférieure à la durée nécessaire pour que la réaction de polymérisation soit complète. On dit que le revêtement est "sec" lorsqu'un niveau acceptable de perfomances, telles que la résistance à la déformation et aux agressions extérieures, est atteint. Au sortir des lignes de fabrication, les fibres sont habituellement enroulées sur des bobines à l'air libre. La deuxième phase de l'étape de polymérisation consiste à laisser les fibres revêtues en contact avec un oxydant tel que l'oxygène de l'air afin que la polymérisation se poursuive hors ligne. Au cours de cette deuxième phase, il se produit une réaction d'oxypolymérisation grâce à la présence d'un catalyseur dans la composition. Le catalyseur agit par promotion de l'absorption d'oxygène dans le film de revêtement ; il catalyse la formation puis la décomposition de peroxydes. La présence de composés insaturés dans la composition permet à la réaction de polymérisation de se produire par ouverture des doubles liaisons et pontage par un atome d'oxygène.

On utilise comme catalyseur d'oxydation de préférence un carboxylate métallique obtenu par réaction de métaux ou dérivés métalliques sur un acide carboxylique d'origine naturelle ou synthétique. De préférence le catalyseur d'oxydation est un carboxylate d'au moins un métal choisi dans le groupe comprenant le cobalt, le manganèse, le zirconium, le calcium, le zinc, l'aluminium et le lithium. Avantageusement le catalyseur d'oxydation est un mélange de carboxylates de métaux différents, ce qui permet de bénéficier éventuellement de leurs propriétés complémentaires. Ces sels organométalliques sont souvent appelés "siccatifs". L'action catalytique de ces composés tient à la capacité de l'ion métal de passer par oxydation de l'état de valence inférieur le plus stable à un état de valence supérieur moins stable. Ce stade permettra ensuite par effet inverse, de générer des radicaux libres sur les chaînes insaturées qui pourront alors polymériser.

La proportion de catalyseur est au plus égale à 10% en poids de la composition. La proportion de catalyseur est de préférence comprise entre 0,5% et 10% en poids, et de préférence encore entre 0,5% et 5% en poids de la composition. Si le revêtement de la fibre comporte plusieurs couches, la proportion de catalyseur peut être égale dans toutes les couches ou différente dans chacune des couches. Le catalyseur d'oxydation peut être également absent de certaines couches, notamment de la couche la plus externe.

Avantageusement le composé insaturé est choisi parmi un monomère et un oligomère comportant une insaturation éthylénique tel qu'un groupement acrylate, uréthane, étheruréthane, vinyl, vinyléther, vinyluréthane, acrylamide. Le composé est de préférence un monomère ou un oligomère uréthane-acrylate.

Selon une variante d'exécution, la composition contient en outre un initiateur de photopolymérisation. Bien entendu on choisit le photoinitiateur de façon telle qu'il présente une efficacité maximale aux longueurs d'onde de la source de rayonnement U.V. utilisée. Ces photoinititeurs sont des molécules susceptibles de créer des radicaux libres par rupture homolytique photoinduite. Comme exemples de photoinitiateurs utilisables, on peut citer les produits commerciaux connus sous les références "IRGACURE® 184", "IRGACURE® 819", "IRGACURE® 1700", "IRGACURE® 1800", etc...

Au cours du procédé selon l'invention, la première phase se déroule à une vitesse au moins égale à 1000m/mn, et de préférence au moins égale à 1200m/mn.

L'invention a aussi pour objet une fibre optique comportant un revêtement polymérisé obtenu par le procédé décrit précédemment, et contenant un catalyseur d'oxydation. Si le revêtement de la fibre comporte plusieurs couches formées à partir de compositions réticulables qui peuvent être analogues ou différentes, le catalyseur d'oxydation est contenu dans au moins une de ces couches, mais il peut aussi bien être présent dans plusieurs de ces couches.

L'invention a encore pour objet un câble de télécommunication comprenant au moins une telle fibre optique.

D'autres caractéristiques et avantages de la présente invention apparaîtront au cours de la description suivante de modes de réalisation donnés à titre illustratif, mais nullement limitatif, et dans le dessin annexé.
La figure 1 est une vue schématique en coupe d'une fibre optique.
La figure 2 représente une vue schématique d'une installation pour le revêtement de fibres optiques.

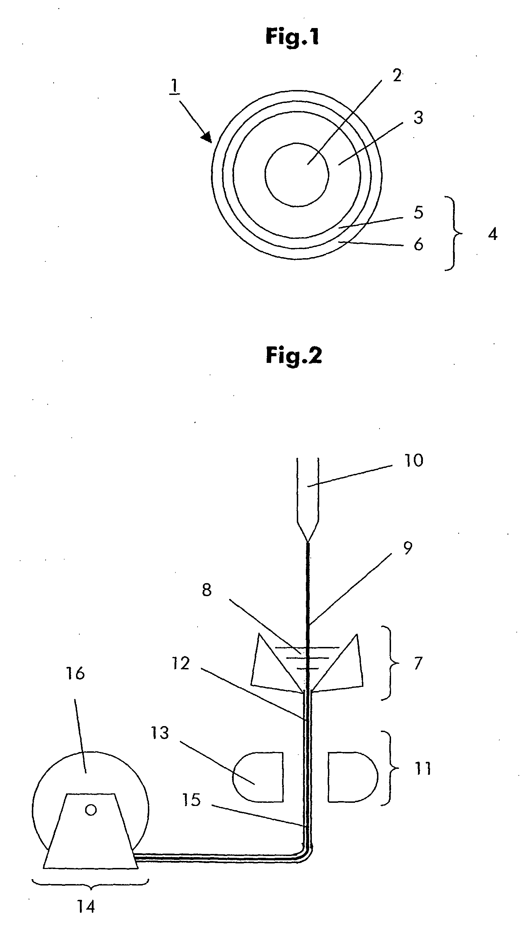

La fibre optique **1** représentée sur la figure 1 comprend un coeur optique **2** en un matériau à base de silice, entouré d'une gaine optique **3** également en un matériau à base de silice. La fibre **1** est revêtue d'un revêtement **4** comprenant une première couche de protection **5** en un matériau plastique, appelée revêtement primaire. Au-dessus de ce revêtement primaire **5,** on trouve une deuxième couche de protection **6** appelée revêtement secondaire. Entre la couche interne **5** et la couche externe **6** peuvent se trouver éventuellement d'autres couches de protection intermédiaire. Le revêtement secondaire **6** est coloré, mais il pourrait aussi bien être recouvert par une couche colorée, afin de pouvoir coder ou reconnaître la fibre **1**. Le revêtement primaire **5**, le revêtement secondaire **6** et les couches intermédiaires éventuelles sont constitués d'un matériau de type polyuréthane acrylate contenant un carboxylate de cobalt, de manganèse, de zirconium ou de calcium.

Sur la figure 2, on a représenté une partie d'une tour de fibrage comprenant notamment :
- au moins une station d'enduction **7** avec une composition polymérisable **8** d'une fibre optique nue **9** obtenue à partir d'une préforme 10,
- au moins une station de polymérisation **11** de la fibre optique enduite **12** comprenant au moins une source de rayonnement ultraviolet **13,** et
- une station de bobinage **14** de la fibre revêtue **15** sur une bobine **16.**

Pour la réalisation du revêtement primaire **5,** la fibre optique nue **9** provenant du fibrage de la préforme **10** est guidée vers la station d'enduction **7.** On prépare une composition de revêtement **8** de composition connue par exemple sous la dénomination "AFC3 ™" contenant un catalyseur d'oxydation qui est un carboxylate de cobalt, de manganèse, de zirconium et/ou de calcium.

La composition de revêtement **8**, maintenue à une température où elle est à l'état liquide, est amenée sous pression par des canaux dans une chambre annulaire, d'où elle est projetée radialement sur la fibre optique **9**. Des appareillages ont été développés pour réaliser l'enduction des fibres optiques qui tiennent compte de l'impératif consistant en ce que la fibre optique, avant ou pendant l'opération d'enduction, ne doit toucher aucune surface solide.

La fibre optique **12** enduite de la composition **8** à polymériser traverse ensuite la station de polymérisation **11** et défile devant une lampe U.V. **13** à une vitesse de l'ordre de 1200m/mn (soit environ 20m/sec). Ces vitesses conduisent à un temps de séjour de la fibre enduite **12** sous le rayonnement U.V. d'environ un dixième de seconde. Puis le revêtement primaire **5** partiellement polymérisé est laissé se refroidir à l'air. L'installation peut comprendre en outre une station de refroidissement (non représentée) placée entre la station de polymérisation **11** et la station de bobinage **14.**

La réalisation des couches successives de revêtement nécessite la présence d'une station d'enduction et d'une station de polymérisation (non représentées), et éventuellement d'une station de refroidissement, pour chacune des couches successivement déposées.

La réalisation du revêtement secondaire **6** s'effectue de manière analogue à ce qui est précédemment décrit pour le revêtement primaire **5** en utilisant une composition de revêtement de référence "AFC3 ™" analogue à celle de la couche de revêtement primaire **5** mais ayant un module d'Young 50 à 100 fois plus élévé, ne contenant pas de catalyseur d'oxydation et contenant en outre un pigment coloré. Munie de son revêtement secondaire **6**, la fibre revêtue **15** est envoyée vers une station de bobinage **14** où elle est enroulée sur une bobine **16** et laissée à l'air libre. Grâce à la présence d'un catalyseur d'oxydation, la polymérisation va se poursuivre et au bout d'une durée comprise entre une heure et quelques jours, la polymérisation du revêtement **4** sera achevée.

Selon un autre mode de réalisation de l'invention, le revêtement primaire est obtenu de la manière décrite précédemment en utilisant la même composition que celle du revêtement **5** ci-dessus. Le revêtement secondaire est obtenu à partir d'une composition de revêtement analogue à celle du revêtement **6** ci-dessus mais contenant en outre un catalyseur d'oxydation.

## Revendications

1. Procédé de revêtement d'une fibre optique comprenant au moins une étape d'enduction de ladite fibre avec une composition de revêtement polymérisable, et au moins une étape de polymérisation de ladite composition, **caractérisé en ce que** ladite composition contient au moins un composé insaturé comportant au moins une double liaison et au moins un catalyseur d'oxydation, et **en ce que** ladite étape de polymérisation comprend une première phase en ligne consistant à soumettre ladite fibre enduite à un rayonnement U.V. pendant une durée inférieure à la durée nécessaire à une polymérisation complète, suivie d'une deuxième phase hors ligne consistant à mettre ladite fibre enduite en présence d'un milieu oxydant afin de compléter la polymérisation.

2. Procédé selon la revendication 1, dans lequel ledit milieu oxydant est gazeux.

3. Procédé selon la revendication 2, dans lequel ledit milieu oxydant est l'oxygène.

4. Procédé selon la revendication 2, dans lequel ledit milieu oxydant est l'air.

5. Procédé selon l'une des revendications précédentes, dans lequel ledit catalyseur d'oxydation est un carboxylate métallique.

6. Procédé selon la revendication 5, dans lequel ledit catalyseur d'oxydation est un carboxylate d'au moins un métal choisi dans le groupe comprenant le cobalt, le manganèse, le zirconium, le calcium, le zinc, l'aluminium et le lithium.

7. Procédé selon l'une des revendications précédentes, dans lequel la proportion dudit catalyseur est au plus égale à 10% en poids de ladite composition.

8. Procédé selon la revendication 7, dans lequel la proportion dudit catalyseur est comprise entre 0,5% et 10% en poids de ladite composition.

9. Procédé selon l'une des revendications précédentes, dans lequel ledit composé insaturé est choisi parmi un monomère et un oligomère acrylate.

10. Procédé selon la revendication 9, dans lequel ledit composé insaturé est choisi parmi un monomère et un oligomère uréthane-acrylate.

11. Procédé selon l'une des revendications précédentes, dans lequel ladite composition contient en outre un initiateur de photopolymérisation.

12. Procédé selon l'une des revendications précédentes, dans lequel ladite première phase se déroule à une vitesse au moins égale à 1000m/mn.

13. Procédé selon la revendication 12, dans lequel ladite première phase se déroule à une vitesse au moins égale à 1200m/mn.

14. Fibre optique comportant un revêtement polymérisé obtenu par le procédé selon l'une des revendications précédentes, **caractérisé en ce que** ledit revêtement contient un catalyseur d'oxydation.

15. Fibre optique selon la revendication 14, dans laquelle ledit revêtement comporte plusieurs couches, l'une au moins desdites couches contenant un catalyseur d'oxydation.

16. Câble de télécommunication comprenant au moins une fibre optique selon l'une des revendications 14 et 15.

## Patentansprüche

1. Beschichtungsverfahren für eine optische Faser, umfassend wenigstens einen Schritt zur Überziehung der Faser mit einer polymerisierbaren Beschichtungszusammensetzung und wenigstens einen Schritt zur Polymerisation der Zusammensetzung, **dadurch gekennzeichnet, dass** die Zusammensetzung wenigstens eine ungesättigte Verbindung, welche wenigstens eine Doppelbindung umfasst, und wenigstens einen Oxidationskatalysator enthält, und dass der Schritt zur Polymerisation eine erste Inline-Phase, welche darin besteht, die überzogene Faser während einer Zeitdauer, welche kleiner ist als die für eine vollständige Polymerisation erforderliche Zeitdauer, einer W-Strahlung auszusetzen, gefolgt von einer zweiten Offline-Phase, welche darin besteht, die überzogene Faser in Gegenwart einer oxidierenden Umgebung zu bringen, um die Polymerisation abzuschließen, umfasst.

2. Verfahren nach Anspruch 1, wobei die oxidierende Umgebung gasförmig ist.

3. Verfahren nach Anspruch 2, wobei die oxidierende Umgebung Sauerstoff ist.

4. Verfahren nach Anspruch 2, wobei die oxidierende Umgebung Luft ist.

5. Verfahren nach einem der vorhergehenden Ansprüche, wobei der Oxidationskatalysator ein Metallcarboxylat ist.

6. Verfahren nach Anspruch 5, wobei der Oxidationskatalysator ein Carboxylat wenigstens eines Metalls ist, welches aus der Gruppe umfassend Kobalt, Mangan, Zirkonium, Calcium, Zink, Aluminium und Lithium ausgewählt ist.

7. Verfahren nach einem der vorhergehenden Ansprüche, wobei der Anteil des Katalysators höchstens gleich 10 Gewichts-% der Zusammensetzung ist.

8. Verfahren nach Anspruch 7, wobei der Anteil des Katalysators zwischen 0,5 und 10 Gewichts-% der Zusammensetzung ist.

9. Verfahren nach einem der vorhergehenden Ansprüche, wobei die ungesättigte Verbindung aus einem monomeren und einem oligomeren Acrylat ausgewählt ist.

10. Verfahren nach Anspruch 9, wobei die ungesättigte Verbindung aus einem monomeren und einem oligomeren Urethanacrylat ausgewählt ist.

11. Verfahren nach einem der vorhergehenden Ansprüche, wobei die Zusammensetzung unter anderem einen Photopolymerisationsinitiator enthält.

12. Verfahren nach einem der vorhergehenden Ansprüche, wobei die erste Phase mit einer Geschwindigkeit abläuft, welche wenigstens gleich 1000 m/min ist.

13. Verfahren nach Anspruch 12, wobei die erste Phase mit einer Geschwindigkeit abläuft, welche wenigstens gleich 1200 m/min ist.

14. Optische Faser, umfassend eine polymerisierte Beschichtung, welche durch das Verfahren nach einem der vorhergehenden Ansprüche erhalten wurde, **dadurch gekennzeichnet, dass** die Beschichtung einen Oxidationskatalysator enthält.

15. Optische Faser nach Anspruch 14, wobei die Beschichtung mehrere Schichten umfasst, wobei wenigstens eine der Schichten einen Oxidationskatalysator enthält.

16. Telekommunikationskabel, umfassend wenigstens eine optische Faser nach einem der Ansprüche 14 und 15.

## Claims

1. Method of coating an optical fibre, comprising at least one step of coating said fibre with a polymerisable coating composition and at least one step of polymerisation of said composition, **characterised in that** said composition comprises at least one unsaturated compound containing at least one double bond and at least one oxidation catalyst; and said polymerisation step comprises a first, in-line phase, which comprises subjecting said coated fibre to UV radiation for a period less than the period necessary for complete polymerisation, followed by a second, out-of-line phase, which comprises placing said coated fibre in the presence of an oxidising medium in order to complete the polymerisation.

2. Method according to claim 1, wherein said oxidising medium is gaseous.

3. Method according to claim 2, wherein said oxidising medium is oxygen.

4. Method according to claim 2, wherein said oxidising medium is air.

5. Method according to one of the preceding claims, wherein said oxidation catalyst is a metal carboxylate.

6. Method according to claim 5, wherein said oxidation catalyst is a carboxylate of at least one metal selected from the group consisting of cobalt, manganese, zirconium, calcium, zinc, aluminium and lithium.

7. Method according to one of the preceding claims, wherein the proportion of said catalyst is at most equal to 10 %, by weight, of said composition.

8. Method according to claim 7, wherein the proportion of said catalyst is between 0.5 % and 10 % inclusive, by weight, of said composition.

9. Method according to one of the preceding claims, wherein said unsaturated compound is selected from acrylate monomers and acrylate oligomers.

10. Method according to claim 9, wherein said unsaturated compound is selected from urethane-acrylate monomers and oligomers.

11. Method according to one of the preceding claims, wherein said composition comprises, in addition, a photopolymerisation initiator.

12. Method according to one of the preceding claims, wherein said first phase takes place at a speed at least equal to 1000 m/min.

13. Method according to claim 12, wherein said first phase takes place at a speed at least equal to 1200 m/min.

14. Optical fibre comprising a polymerised coating obtained by the process according to one of the preceding claims, **characterised in that** said coating comprises an oxidation catalyst.

15. Optical fibre according to claim 14, wherein said coating comprises several layers, at least one of said layers comprising an oxidation catalyst.

16. Telecommunications cable comprising at least one optical fibre according to one of claims 14 and 15.
